# EUROPÄISCHE PATENTANMELDUNG

(11) **EP 0 743 763 A2**
(43) Veröffentlichungstag der Anmeldung: **20.11.1996**
(21) Anmeldenummer: 96107368.1
(22) Anmeldetag: 09.05.1996
(51) Int. Cl.: H04B 1/16, H04B 1/38

(54) **Stromsparverfahren eines Handfunkgerätes**

(30) Priorität: 17.05.1995 DE 19518134
(71) Anmelder: SIEMENS AKTIENGESELLSCHAFT, 80333 München (DE)
(72) Erfinder: Stanzl, Gerhard, Dipl.-Ing., 85053 Ingolstadt (DE); Goldhofer, Franz, Dipl.-Ing., 83666 Waakirchen (DE)

(57) **Zusammenfassung**

Bei einem Handgerät für ein Mobilfunksystem werden während einer zyklischen Anfertigung von Feldstärketabellen mit evtl. sich anschließenden Aufsynchronisierversuchen zur Teilnahme am Netzbetrieb Pausen eingelegt zur Senkung des Stromverbrauchs.

## Beschreibung

Die Erfindung bezieht sich auf ein Handfunkgerät für ein Mobilfunksystem mit einer vom Teilnehmer vorgenommenen spektralen Auswertung von Frequenzbändern zur Netzsynchronisation.

Bei Mobilfunksystemen, insbesondere bei Handheld-Geräten ist die Standby-Zeit ein wichtiges Leistungsmerkmal. Ziel hierbei ist es, aufgrund geringeren Stromverbrauches die Akkukapazität niedrig zu halten, was sich günstig auf Gewicht, Volumen und Preis auswirkt.

Es gibt bei den vorstehend genannten Handies einen Betriebszustand, in dem der Stromverbrauch besonders hoch ist. Dies ist der Fall, wenn das Gerät keinen Träger (Frequenz, Zelle, Basisstation) zur Synchronisation und somit zur Teilnahme am Netzbetrieb finden kann. Laut Spezifikationen müssen nun periodisch alle Frequenzkanäle des jeweiligen Systems (z.B. bei GSM900 124 Kanäle, bei DSC1800 374 Kanäle) nach Feldstärke beobachtet werden.

Werden Frequenzen mit Pegeln erfaßt, die im Definitionsbereich dieser mobilen Teilnehmerstationen liegen, so kann der Netzsynchronisationsvorgang versucht werden. Beendet ist dieser stromzehrende Prozeß erst nach gelungener Synchronisation. Dieser Synchronisationsvorgang kann jedoch oftmals nicht stattfinden, beispielsweise während einer Fahrt in einem unterirdischen Verkehrsmittel oder einem Kaufhausaufenthalt, da die Feldstärkeverhältnisse in diesen Fällen ungenügend sind.

Der Erfindung liegt die Aufgabe zugrunde, einen stromsparende Lösung für den Netzsynchronisationsvorgang eines Handfunkgerätes zu schaffen.

Diese Aufgabe wird bei einem Handfunkgerät der eingangs beschriebenen Art gemäß der Erfindung gelöst durch während einer zyklischen Anfertigung von Feldstärketabellen mit evtl. sich anschließenden Aufsynchronisierversuchen eingelegte Pausen zur Senkung des Stromverbrauchs des Gerätes.

Vorteilhafte Ausgestaltungen und Weiterbildungen des Erfindungsgegenstandes sind in den Unteransprüchen angegeben.

Nachstehend wird die Erfindung näher erläutert: Mobiltelefone müssen sich zur Teilnahme am Netzbetrieb auf das jeweilige Mobilfunksystem synchronisieren. Werden Frequenzen mit Pegeln erfaßt, die im Definitionsbereich dieser Mobiltelefone liegen, so kann der Netzsynchronisationsvorgang versucht werden. Hierzu werden Feldstärketabellen der Frequenzkanäle des Systems angefertigt. Gemäß der vorliegenden Erfindung werden während der zyklischen Anfertigung von Feldstärketabellen mit evtl. sich anschließenden Aufsynchronisierversuchen Pausen eingelegt, um den Stromverbrauch des Gerätes zu senken.

Verschiedene Ausbildungen hinsichtlich der Gestaltung, Einstellung und Implementierung der Pausen werden nachfolgend beschrieben: Das Einlegen der Pause, d.h. Ein- oder Ausschalten kann der Benutzer über einen Menuepunkt im MMI (Man Machine Interface) selbst vornehmen. Ebenso kann der Benutzer über das MMI die Dauer der Pause einstellen. Die Dauer der Pause kann aber auch automatisch variiert werden. Dabei ist es sinnvoll, das Ergebnis des Scanvorganges für die Dauer der Pause heranzuziehen. Liefern die Scanvorgänge schlechte Feldstärkewerte für alle Frequenzen, kann die Pause länger sein. Weisen hingegen einige Frequenzen bessere Feldstärkewerte auf, so wird die Pause verkürzt. Die Pause kann automatisch verkürzt werden bzw. gänzlich entfallen, wenn das Gerät extern mit Strom versorgt wird. Dies ist beispielsweise der Fall, wenn ein Charger angeschlossen ist oder das Gerät im Autoeinbausatz steckt.

Der Stromverbrauch während der Pause kann zusätzlich durch Abschalten von Hardwarefunktionalitäten (Empfänger, digitaler Empfangspfad) reduziert werden, wodurch zudem die elektromagnetische Belastung der Umwelt reduziert werden kann.

Der erfindungsgemäße erweiterte Stromsparmode ist übertragbar auf alle Systeme, bei welchen es im mobilen Betrieb auf Standby-Zeit in Verbindung mit spektraler Auswertung von Frequenzbändern ankommt. Durch die Senkung des Stromverbrauchs wird die Standby-Zeit in schlecht versorgten Gebieten immens erhöht.

## Patentansprüche

1. Handfunkgerät für ein Mobilfunksystem mit einer vom Funkteilnehmer vorgenommenen spektralen Auswertung von Frequenzbändern zur Netzsynchronisation, **gekennzeichnet** durch während einer zyklischen Anfertigung von Feldstärketabellen mit evtl. sich anschließenden Aufsynchronisierversuchen eingelegte Pausen zur Senkung des Stromverbrauchs des Gerätes.

2. Handfunkgerät nach Anspruch 1, dadurch **gekennzeichnet,** daß die Einstellung (Ein- oder Ausschalten) der Pausen durch den Benutzer über einen Menuepunkt in einem MMI (Man Machine Interface) erfolgt.

3. Handfunkgerät nach Anspruch 1 oder 2, dadurch **gekennzeichnet,** daß die Einstellung der Dauer der Pausen vom Benutzer über das MMI erfolgt.

4. Handfunkgerät nach einem der Ansprüche 1 bis 3, dadurch **gekennzeichnet,** daß die Dauer der Pausen automatisch variiert wird.

5. Handfunkgerät nach einem der Ansprüche 1 bis 4, dadurch **gekennzeichnet,** daß während der Pausen eine zusätzliche Reduzierung des Stromverbrauchs durch Abschalten von Hardwarefunktionalitäten erfolgt.
